# EUROPEAN PATENT APPLICATION

(11) **EP 4 804 109 A1**
(43) Date of publication of application: **09.09.2026**
(21) Application number: 24885776.5
(22) Date of filing: 30.10.2024
(51) Int. Cl.: G06Q 50/04, D05B 19/02

(54) **SEWING MANAGEMENT SYSTEM AND SEWING MANAGEMENT METHOD**

(30) Priority: 31.10.2023 JP 2023186315
(71) Applicant: JUKI Corporation, Tama-shi, Tokyo 206-8551 (JP)
(72) Inventor: ATSUMI Tadashi, Tama-shi, Tokyo 206-8551 (JP); YAMADA Miki, Tama-shi, Tokyo 206-8551 (JP); OKAMURA Masahiko, Tama-shi, Tokyo 206-8551 (JP)
(74) Representative: Hoeger, Stellrecht & Partner Patentanwälte mbB
(86) International application number: PCT/JP2024/038740
(87) International publication number: WO 2025/095009

(57) **Abstract**

A sewing management system (1) includes a normal operation time calculation unit (61) configured to calculate a normal operation time indicating a time required for normal operation in which a worker sews a workpiece (100) using a sewing machine (2); a rework operation time calculation unit (62) configured to calculate a rework operation time indicating a time required for rework operation in which the worker corrects, using the sewing machine, the workpiece (100) after being subjected to the normal operation; and an output unit (64) configured to output the normal operation time and the rework operation time.

## Description

### TECHNICAL FIELD

The present disclosure relates to a sewing management system and a sewing management method.

### BACKGROUND ART

In a technical field related to a sewing management system, a sewing management system as disclosed in Patent Literature 1 is known.

### CITATION LIST

### PATENT LITERATURE

Patent Literature 1: JP2020-168056A

### SUMMARY OF INVENTION

### TECHNICAL PROBLEM

A workpiece sewn in a sewing step is inspected in an inspection step. The workpiece in which a defect is found in the inspection step is returned to the sewing step and corrected. In order to appropriately make a production plan for a sewn product, it is necessary to grasp a time required for the rework operation.

An object of the present disclosure is to appropriately make a production plan for a sewn product.

### SOLUTION TO PROBLEM

A sewing management system of the present disclosure includes a normal operation time calculation unit configured to calculate a normal operation time indicating a time required for normal operation in which a worker sews a workpiece using a sewing machine; a rework operation time calculation unit configured to calculate a rework operation time indicating a time required for rework operation in which the worker corrects, using the sewing machine, the workpiece after being subjected to the normal operation; and an output unit configured to output the normal operation time and the rework operation time.

### ADVANTAGEOUS EFFECTS OF INVENTION

According to the sewing management system of the present disclosure, a production plan for a sewn product is appropriately made.

### BRIEF DESCRIPTION OF DRAWINGS

[Fig. 1] Fig. 1 is a diagram schematically showing a sewing management system according to an embodiment.
[Fig. 2] Fig. 2 is a hardware configuration diagram showing a management controller according to the embodiment.
[Fig. 3] Fig. 3 is a functional block diagram showing a management device and sewing machines according to the embodiment.
[Fig. 4] Fig. 4 is a flowchart showing a sewing management method according to the embodiment.
[Fig. 5] Fig. 5 is a diagram showing an example of display data displayed on a display device according to the embodiment.

### DESCRIPTION OF EMBODIMENTS

Hereinafter, embodiments according to the present disclosure will be described with reference to the drawings, but the present disclosure is not limited to the embodiments. The components of the embodiments described below can be appropriately combined. A part of the components may not be used.

### [Sewing Management System]

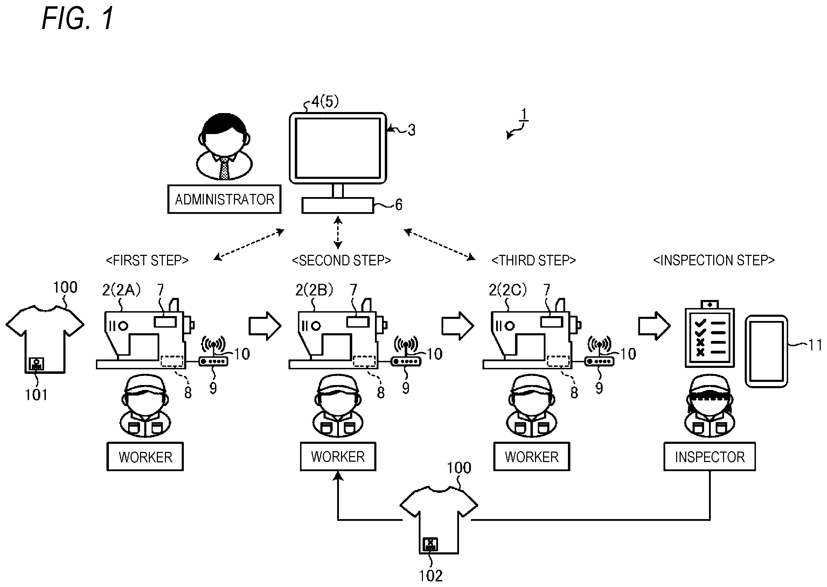

Fig. 1 is a diagram schematically showing a sewing management system 1 according to an embodiment. The sewing management system 1 includes a management device 3 that manages a production process of a sewn product. The production process includes sewing steps of sewing a workpiece 100 using sewing machines 2, and an inspection step of inspecting the workpiece 100 sewn in the sewing steps. Each of the sewing machines 2 is an industrial sewing machine. The sewn product is produced in a production line including the sewing machines 2. A plurality of sewing machines 2 are installed in the production line. The production line is installed in a sewing factory. The sewing machines 2 operate in the sewing factory. The workpiece 100 is sewn by the sewing machines 2 to produce the sewn product. In the embodiment, the management device 3 is installed in the sewing factory. The management device 3 may be installed outside the sewing factory.

In the sewing steps, the workpiece 100 is sewn by the sewing machines 2 to produce the sewn product. Examples of the workpiece include fabric. Examples of the sewn product include clothes.

In the sewing factory, a plurality of types of sewing machines 2 corresponding to applications are installed. In the sewing factory, a plurality of types of sewing machines 2 are installed to correspond to a plurality of sewing steps for producing the sewn product. Examples of the type of the sewing machine 2 include a lockstitch sewing machine for sewing a body part, a button sewing machine for attaching a button to the body part, and a pocket sewing machine for attaching a pocket to the body part. In one sewing factory, many sewing machines 2 of various types are installed. In order to simplify the description, three sewing machines 2 are shown in Fig. 1. A first sewing machine 2A is used in a first step for producing the sewn product. A second sewing machine 2B is used in a second step for producing the sewn product. A third sewing machine 2C is used in a third step for producing the sewn product. In the sewing factory, a plurality of sewing machines 2 of one type may be installed.

In the sewing factory, an administrator, workers, and an inspector work. The administrator manages the workers, the inspector, and the sewing machines 2. The workers sew the workpiece 100 using the sewing machines 2 in the sewing steps. The inspector inspects the workpiece 100 sewn by the sewing machines 2 in the inspection step. Each of the administrator, the worker, and the inspector may be regarded as a user of the sewing machine 2. The number of administrators may be one or may be multiple. The number of workers may be multiple or may be one. For example, one worker may operate a plurality of sewing machines 2. The number of inspectors may be multiple or may be one.

The management device 3 includes a display device 4, an input device 5, and a management controller 6. The display device 4 displays display data. The display device 4 includes a flat panel display, such as a liquid crystal display or an organic EL display. The input device 5 is operated by the administrator to generate input data. The input device 5 may be operated by the worker or an operator. The input device 5 includes a touch panel (touch sensor) disposed on a display screen of the display device 4. The input device 5 may be a computer keyboard, a mouse, or a voice input device. The management controller 6 includes a computer system. The management controller 6 includes at least one processor and a main memory that stores a computer program executable by the processor.

The sewing machine 2 includes an operation panel 7, a sewing machine controller 8, an identification device 9, and a wireless communication device 10. The operation panel 7 is operated by the worker to generate operation data. The operation panel 7 includes a touch panel (touch sensor) disposed on a display screen of a display. The sewing machine controller 8 includes a computer system. The sewing machine controller 8 includes at least one processor and a main memory that stores a computer program executable by the processor.

The identification device 9 identifies identification tags (101, 102) attached to the workpiece 100. The identification device 9 outputs identification data indicating an identification result for each of the identification tags (101, 102). The identification tags (101, 102) are attached to the workpiece 100 to identify the workpiece 100. The identification tag (101, 102) is attachable to and detachable from the workpiece 100. Examples of the identification tags (101, 102) include an RFID tag and a two-dimensional code tag on which a two-dimensional code is printed. Examples of the identification device 9 include an RFID ID reader and a two-dimensional code reader.

The inspector inspects the workpiece 100 in the inspection step. The inspection for the workpiece 100 includes an intermediate inspection for inspecting the workpiece 100 for which a part of the sewing steps are ended, and a final inspection for inspecting the workpiece for which all of the sewing steps are ended. The inspector carries an information terminal 11. Examples of the information terminal 11 include a tablet terminal and a smartphone. The information terminal 11 includes a display, an input device such as a touch panel, and a computer system.

The management device 3 is shared by the plurality of sewing machines 2 and the information terminal 11 in the sewing factory. The number of management devices 3 is less than the number of sewing machines 2. The management device 3 can communicate with the sewing machines 2 and the information terminal 11. The management controller 6 of the management device 3 communicates with the sewing machine controller 8 of the sewing machine 2 and the information terminal 11. The management controller 6, the sewing machine controller 8, and the information terminal 11 wirelessly communicate with each other. The management controller 6, the sewing machine controller 8, and the information terminal 11 wirelessly communicate with each other via a local area network (LAN). Examples of the wireless LAN include Wifi (registered trademark). The management controller 6, the sewing machine controller 8, and the information terminal 11 may wirelessly communicate with each other via a personal area network (PAN). Examples of the wireless PAN include Bluetooth (registered trademark).

The management controller 6 transmits a control command to the sewing machine controller 8 of the sewing machine 2 based on the input data generated by operating the input device 5.

The sewing machine controller 8 transmits operation data of the sewing machine 2 to the management controller 6 via the wireless communication device 10. The operation data of the sewing machine 2 includes operation conditions of the sewing machine 2. The operation conditions of the sewing machine 2 include a stitch length, a stitch pitch, a stitch pattern, a feed speed of the sewing object, the number of stitches, a thread tension, and a pressing pressure on the sewing object. The sewing machine controller 8 monitors the operation conditions of the sewing machine 2. The sewing machine 2 is provided with a sensor that detects each of the operation conditions of the sewing machine 2. Examples of the sensor include a tension sensor that detects the thread tension and a pressing pressure sensor that detects the pressing pressure on the sewing object. The sewing machine controller 8 can monitor the operation conditions of the sewing machine 2 by acquiring detection data of the sensor. The sewing machine 2 includes a sewing machine motor for operating a needle bar and a thread take-up lever. The sewing machine controller 8 can monitor the operation conditions of the sewing machine 2 by acquiring a drive signal of the sewing machine motor. The operation data of the sewing machine 2 indicates an operation history of the sewing machine 2. The operation history of the sewing machine 2 includes at least one of an operation date and time of the sewing machine 2, a continuous operation time of the sewing machine 2, a cumulative operation time of the sewing machine 2, a type of a workpiece sewn by the sewing machine 2, the number of stitches during the sewing, error information generated in the sewing machine 2, and/or the worker who operates the sewing machine 2.

The sewing machine controller 8 transmits the identification data indicating the identification result for each of the identification tags (101, 102) obtained by the identification device 9 to the management controller 6.

The management controller 6 collects the operation data of each of the plurality of sewing machines 2. The management controller 6 displays, on the display device 4, the operation data of each of the plurality of sewing machines 2.

The inspector operates an input device of the information terminal 11 to input an inspection result for the workpiece 100 to the information terminal 11. The information terminal 11 transmits inspection data indicating the inspection result for the workpiece 100 to the management controller 6.

The management controller 6 transmits guidance data indicating inspection items and inspection methods of the workpiece 100 to the information terminal 11. The guidance data is displayed on the display of the information terminal 11. The inspector inspects the workpiece 100 while checking the guidance data displayed on the display.

### [Computer System]

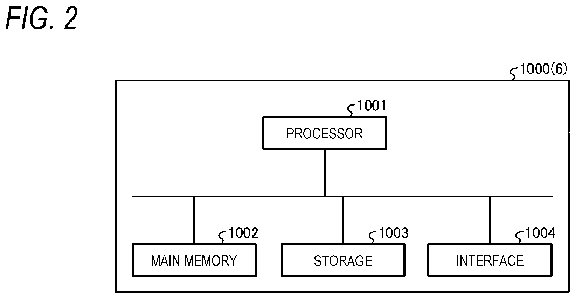

Fig. 2 is a hardware configuration diagram showing the management controller 6 according to the embodiment. The management controller 6 includes a computer system 1000. The computer system 1000 includes a processor 1001 such as a central processing unit (CPU), a main memory 1002 including a nonvolatile memory such as a read only memory (ROM) and a volatile memory such as a random access memory (RAM), a storage 1003, and an interface 1004 including an input/output circuit. A function of the management controller 6 is stored in the storage 1003 as a computer program. The processor 1001 reads the computer program from the storage 1003, loads the computer program into the main memory 1002, and executes processing according to the computer program. The computer program may be distributed to the computer system 1000 via a network.

Similarly, each of the sewing machine controller 8 and the information terminal 11 includes a computer system including a processor, a main memory, a storage, and an interface.

### [Management Device and Sewing Machine]

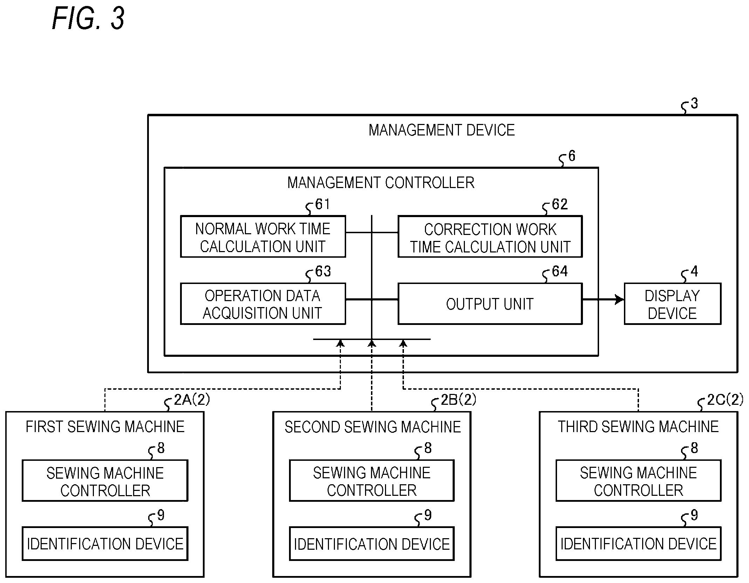

Fig. 3 is a functional block diagram showing the management device 3 and the sewing machines 2 according to the embodiment. As shown in Fig. 3, the management controller 6 includes a normal operation time calculation unit 61, a rework operation time calculation unit 62, an operation data acquisition unit 63, and an output unit 64.

The normal operation time calculation unit 61 calculates a normal operation time indicating a time required for normal operation in which the worker sews the workpiece 100 using the sewing machine 2. The normal operation time calculation unit 61 calculates the normal operation time for each of the plurality of sewing machines 2. The normal operation time corresponds to a so-called standard time. The normal operation time (standard time) refers to a time required when the work is performed under optimum methods and conditions. The standard time includes a work time and a margin time. The work time refers to a time required for a worker having a standard proficiency level to work under standard work procedures, methods, and conditions. The margin time refers to an additional time that irregularly or accidentally appears during the execution of work, and a time for compensating for a decrease in production caused by other factors. The normal operation time may be a cumulative value of the normal operation time for one sewing machine 2.

The rework operation time calculation unit 62 calculates a rework operation time indicating a time required for rework operation in which the worker corrects, using the sewing machine 2, the workpiece 100 after being subjected to the normal operation. When there are a plurality of sewing machines 2 that perform the rework operation, the rework operation time calculation unit 62 calculates the rework operation time for each of the plurality of sewing machines 2. The rework operation time corresponds to a standard time required for correction. The rework operation time may be a cumulative value of the rework operation time for one sewing machine 2.

The operation data acquisition unit 63 acquires the operation data transmitted from the sewing machine controller 8 of the sewing machine 2. The operation data acquisition unit 63 acquires the operation data of each of the plurality of sewing machines 2.

The output unit 64 outputs the normal operation time calculated by the normal operation time calculation unit 61 and the rework operation time calculated by the rework operation time calculation unit 62. In the embodiment, the output unit 64 outputs the normal operation time and the rework operation time to the display device 4.

### [Calculation of Normal operation Time]

When the normal operation is performed on the workpiece 100, the identification tag 101 is attached to the workpiece 100. The identification tag 101 is attached to the workpiece 100 to identify the workpiece 100 on which the normal operation is to be performed. In the following description, the identification tag 101, attached to the workpiece 100 to identify the workpiece 100 on which the normal operation is to be performed, is appropriately referred to as a normal tag 101.

When the normal operation is started for the workpiece 100, the normal tag 101 is identified by the identification device 9. When the normal operation is started for the workpiece 100, the worker operates a start button provided on the operation panel 7 and causes the identification device 9 to read the normal tag 101 attached to the workpiece 100. After causing the identification device 9 to read the normal tag 101, the worker starts the normal operation. The worker performs setup for sewing the workpiece 100 or sews the workpiece 100 using the sewing machine 2. After the normal operation is ended, the worker operates an end button provided on the operation panel 7 and causes the identification device 9 to read the normal tag 101 attached to the workpiece 100 again.

The sewing machine controller 8 transmits, to the management controller 6, the operation data generated by operating the operation panel 7 and first identification data indicating the identification data of the normal tag 101 obtained by the identification device 9. The operation data generated by operating the start button of the operation panel 7, the first identification data of the normal tag 101 read by the identification device 9 at the start of the normal operation, the operation data generated by operating the end button of the operation panel 7, and the first identification data of the normal tag 101 read by the identification device 9 at the end of the normal operation are transmitted to the management controller 6.

The normal operation time calculation unit 61 calculates the normal operation time based on the first identification data obtained when the identification device 9 identifies the normal tag 101. The normal operation time calculation unit 61 can calculate the normal operation time based on the first identification data of the normal tag 101 read by the identification device 9 at the start of the normal operation and the first identification data of the normal tag 101 read by the identification device 9 at the end of the normal operation. That is, the normal operation time calculation unit 61 can calculate the normal operation time based on a difference between a time point when the start button of the operation panel 7 is operated and the normal tag 101 is read into the identification device 9 and a time point when the end button of the operation panel 7 is operated and the normal tag 101 is read into the identification device 9.

The normal operation time is calculated for each of the first step (first sewing machine 2A), the second step (second sewing machine 2B), and the third step (third sewing machine 2C).

The normal operation time calculation unit 61 may calculate the normal operation time based on the operation data acquired by the operation data acquisition unit 63. As described above, the operation data of the sewing machine 2 includes the operation conditions of the sewing machine 2. The operation conditions of the sewing machine 2 include a drive time of the sewing machine motor. The normal operation time calculation unit 61 may calculate the drive time of the sewing machine motor in the normal operation as the normal operation time.

### [Calculation of Rework operation Time]

The workpiece 100 after being subject to the normal operation is inspected by the inspector in the inspection step. The workpiece 100 in which a defect is found in the inspection step is returned to a corresponding sewing step, and the rework operation is performed. When the rework operation is performed on the workpiece 100, the identification tag 102 is attached to the workpiece 100. The workpiece 100 to which the identification tag 102 is attached is returned to the corresponding sewing step. The identification tag 102 is attached to the workpiece 100 to identify the workpiece 100 on which the rework operation is to be performed. In the following description, the identification tag 102, attached to the workpiece 100 to identify the workpiece 100 on which the rework operation is to be performed, is appropriately referred to as a correction tag 102.

For example, when a defect caused by the work in the first step is found, the workpiece 100 to which the correction tag 102 is attached is returned to the first step (first sewing machine 2A). When a defect caused by the work in the second step or the third step is found, the workpiece 100 to which the correction tag 102 is attached is returned to the second step (second sewing machine 2B) or the third step (third sewing machine 2C). Fig. 1 shows an example in which the workpiece 100 to which the correction tag 102 is attached is returned to the second step (second sewing machine 2B).

When the rework operation is started for the workpiece 100, the correction tag 102 is identified by the identification device 9. When the rework operation is started for the workpiece 100, the worker operates the start button provided on the operation panel 7 and causes the identification device 9 to read the correction tag 102 attached to the workpiece 100. After causing the identification device 9 to read the correction tag 102, the worker starts the rework operation. The worker performs setup for correcting the workpiece 100 or corrects the workpiece 100 using the sewing machine 2. After the rework operation is ended, the worker operates the end button provided on the operation panel 7 and causes the identification device 9 to read the correction tag 102 attached to the workpiece 100 again.

The sewing machine controller 8 transmits, to the management controller 6, the operation data generated by operating the operation panel 7 and second identification data indicating the identification data of the correction tag 102 obtained by the identification device 9. The operation data generated by operating the start button of the operation panel 7, the second identification data of the correction tag 102 read by the identification device 9 at the start of the rework operation, the operation data generated by operating the end button of the operation panel 7, and the second identification data of the correction tag 102 read by the identification device 9 at the end of the rework operation are transmitted to the management controller 6.

The rework operation time calculation unit 62 calculates the rework operation time based on the second identification data obtained when the identification device 9 identifies the correction tag 102. The rework operation time calculation unit 62 can calculate the rework operation time based on the second identification data of the correction tag 102 read by the identification device 9 at the start of the rework operation and the second identification data of the correction tag 102 read by the identification device 9 at the end of the rework operation. That is, the rework operation time calculation unit 62 can calculate the rework operation time based on a difference between a time point when the start button of the operation panel 7 is operated and the correction tag 102 is read by the identification device 9 and a time point when the end button of the operation panel 7 is operated and the correction tag 102 is read by the identification device 9.

When there are a plurality of sewing steps (sewing machines 2) for performing the rework operation, the rework operation time is calculated for each of the plurality of sewing steps (sewing machines 2).

The rework operation time calculation unit 62 may calculate the rework operation time based on the operation data acquired by the operation data acquisition unit 63. As described above, the operation data of the sewing machine 2 includes the operation conditions of the sewing machine 2. The operation conditions of the sewing machine 2 include the drive time of the sewing machine motor. The rework operation time calculation unit 62 may calculate the drive time of the sewing machine motor in the rework operation as the rework operation time.

### [Sewing Management Method]

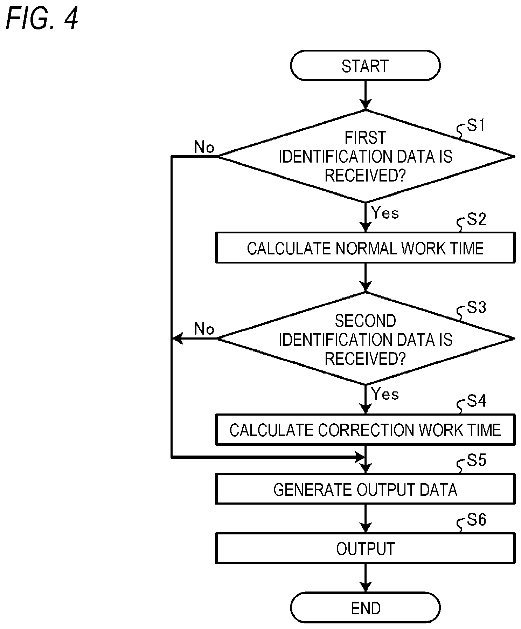

Fig. 4 is a flowchart showing a sewing management method according to the embodiment. The normal operation time calculation unit 61 determines whether the first identification data of the normal tag 101 is received (step S1). If it is determined in step S1 that the first identification data is received (step S1: Yes), the normal operation time calculation unit 61 calculates the normal operation time based on the first identification data (step S2). The first identification data is transmitted from the sewing machine controller 8 to the management controller 6 at the start of the normal operation and the end of the normal operation. The normal operation time calculation unit 61 can calculate the normal operation time based on the first identification data received at the start of the normal operation and the first identification data received at the end of the normal operation.

The rework operation time calculation unit 62 determines whether the second identification data of the correction tag 102 is received (step S3). If it is determined in step S3 that the second identification data is received (step S3: Yes), the rework operation time calculation unit 62 calculates the rework operation time based on the second identification data (step S4). The second identification data is transmitted from the sewing machine controller 8 to the management controller 6 at the start of the rework operation and the end of the rework operation. The rework operation time calculation unit 62 can calculate the rework operation time based on the second identification data received at the start of the rework operation and the second identification data received at the end of the rework operation.

The output unit 64 generates output data based on the normal operation time calculated in step S2 and the rework operation time calculated in step S4 (step S5). The output unit 64 causes the display device 4 to output the output data (step S6). In the embodiment, the output data includes display data to be displayed on the display device 4.

If it is determined in step S1 that the first identification data is not received (step S1: No), the output data is generated without calculating the normal operation time. If it is determined in step S3 that the second identification data is not received (step S3: No), the output data is generated without calculating the rework operation time.

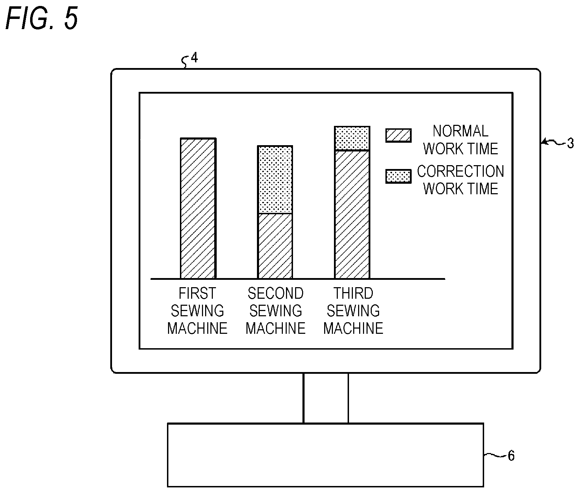

Fig. 5 is a diagram showing an example of the display data displayed on the display device 4 according to the embodiment. As shown in Fig. 5, the output unit 64 displays the normal operation time and the rework operation time on the display device 4. In the example shown in Fig. 5, the output unit 64 displays, on the display device 4, a bar graph indicating a relationship between the normal operation time and the rework operation time. The administrator can recognize the relationship between the normal operation time and the rework operation time based on the display data displayed on the display device 4.

The output unit 64 displays, on the display device 4, the normal operation time and the rework operation time for each of the plurality of sewing machines 2. The administrator can recognize the relationship between the normal operation time and the rework operation time in each of the plurality of sewing machines 2 based on the display data displayed on the display device 4.

The output unit 64 may display, on the display device 4, the normal operation time and the rework operation time for each of a plurality of workers.

### [Advantageous Effects]

As described above, according to the embodiment, the sewing management system 1 includes the normal operation time calculation unit 61 configured to calculate the normal operation time indicating a time required for the normal operation in which the worker sews the workpiece 100 using the sewing machine 2; the rework operation time calculation unit 62 configured to calculate the rework operation time indicating a time required for the rework operation in which the worker corrects, using the sewing machine 2, the workpiece 100 after being subjected to the normal operation; and the output unit 64 configured to output the normal operation time and the rework operation time. Since not only the time required for the normal operation but also the time required for the rework operation is calculated, an administrator can recognize a total work time including the normal operation time and the rework operation time. The administrator can recognize a ratio of the rework operation time to the total work time. Therefore, the administrator can appropriately make a production plan for a sewn product.

The normal tag 101 for identifying the workpiece 100 on which the normal operation is to be performed is attached to the workpiece 100. The correction tag 102 for identifying the workpiece 100 on which the rework operation is to be performed is attached to the workpiece 100. The sewing machine 2 includes the identification device 9 that identifies the normal tag 101 and the correction tag 102. The normal operation time calculation unit 61 can calculate the normal operation time based on the first identification data obtained when the identification device 9 identifies the normal tag 101. The rework operation time calculation unit 62 can calculate the rework operation time based on the second identification data obtained when the identification device 9 identifies the correction tag 102. Further, each of the normal tag 101 and the correction tag 102 includes product number data of the workpiece 100 and display data indicating a relationship among a product number, the normal operation time, and the rework operation time is displayed on the display device 4, and thus the administrator can manage the normal operation time and the rework operation time for each product number.

A plurality of sewing machines 2 are provided. The output unit 64 displays, on the display device 4, the relationship between the normal operation time and the rework operation time for each of the plurality of sewing machines 2. The administrator can manage the normal operation time and the rework operation time for each of the sewing machines 2. Further, the relationship between the normal operation time and the rework operation time is displayed on the display device 4 for each of the plurality of workers, the administrator can manage the normal operation time and the rework operation time for each of the workers. The administrator can determine an ability of the worker and determine a reward of the worker based on a relationship among the worker, the normal operation time, and the rework operation time. The administrator may determine that the ability of the worker is higher as the rework operation time is shorter. The administrator may increase the reward of the worker as the rework operation time is shorter.

### [Another Embodiment]

In the above embodiment, the rework operation time calculation unit 62 may calculate a frequency of the rework operation in a predetermined period of time (for example, one day or one week). The rework operation time calculation unit 62 may calculate the frequency of the rework operation for each of the sewing machines 2 or each of the workers.

In the above embodiment, at the start of the normal operation and the rework operation, the start button of the operation panel 7 is operated and the identification tag (101, 102) is read by the identification device 9, and at the end of the normal operation and the rework operation, the end button of the operation panel 7 is operated and the identification tag (101, 102) is read by the identification device 9. As long as the management controller 6 can recognize the start and the end of the normal operation and the rework operation, the operation panel 7 may not be operated.

The present disclosure includes the following aspects.

A sewing management system comprising:
a normal operation time calculation unit configured to calculate a normal operation time indicating a time required for normal operation in which a worker sews a workpiece using a sewing machine;
a rework operation time calculation unit configured to calculate a rework operation time indicating a time required for rework operation in which the worker corrects, using the sewing machine, the workpiece after being subjected to the normal operation; and
an output unit configured to output the normal operation time and the rework operation time.
(2) The sewing management system according to (1), in which
a normal tag for identifying the workpiece on which the normal operation is to be performed is attached to the workpiece,
a correction tag for identifying the workpiece on which the rework operation is to be performed is attached to the workpiece,
the sewing machine includes an identification device that identifies the normal tag and the correction tag,
the normal operation time calculation unit calculates the normal operation time based on first identification data obtained when the identification device identifies the normal tag, and
the rework operation time calculation unit calculates the rework operation time based on second identification data obtained when the identification device identifies the correction tag.
(3) The sewing management system according to (1), in which
a plurality of the sewing machines are provided, and
the output unit displays, on a display device, the normal operation time and the rework operation time for each of the plurality of sewing machines.
(4) A sewing management method including:
   calculating a normal operation time indicating a time required for normal operation in which a worker sews a workpiece using a sewing machine;
   calculating a rework operation time indicating a time required for rework operation in which the worker corrects, using the sewing machine, the workpiece after being subjected to the normal operation; and
   outputting the normal operation time and the rework operation time.

The present application is based on Japanese Patent Application No. 2023-186315 filed on October 31, 2023, the contents of which are incorporated herein by reference.

## Claims

1. A sewing management system comprising:
a normal operation time calculation unit configured to calculate a normal operation time indicating a time required for normal operation in which a worker sews a workpiece using a sewing machine;
a rework operation time calculation unit configured to calculate a rework operation time indicating a time required for rework operation in which the worker corrects, using the sewing machine, the workpiece after being subjected to the normal operation; and
an output unit configured to output the normal operation time and the rework operation time.

2. The sewing management system according to claim 1, wherein
a normal tag for identifying the workpiece on which the normal operation is to be performed is attached to the workpiece,
a correction tag for identifying the workpiece on which the rework operation is to be performed is attached to the workpiece,
the sewing machine includes an identification device that identifies the normal tag and the correction tag,
the normal operation time calculation unit calculates the normal operation time based on first identification data obtained when the identification device identifies the normal tag, and
the rework operation time calculation unit calculates the rework operation time based on second identification data obtained when the identification device identifies the correction tag.

3. The sewing management system according to claim 1, wherein
a plurality of the sewing machines are provided, and
the output unit displays, on a display device, the normal operation time and the rework operation time for each of the plurality of sewing machines.

4. A sewing management method comprising:
calculating a normal operation time indicating a time required for normal operation in which a worker sews a workpiece using a sewing machine;
calculating a rework operation time indicating a time required for rework operation in which the worker corrects, using the sewing machine, the workpiece after being subjected to the normal operation; and
outputting the normal operation time and the rework operation time.
